# EUROPEAN PATENT SPECIFICATION

(11) **EP 1 204 016 B1**
(45) Date of publication and mention of the grant of the patent: **11.04.2007**
(21) Application number: 00830731.6
(22) Date of filing: 03.11.2000
(51) Int. Cl.: G06F 1/32

(54) **Power down protocol for integrated circuits**
Abschaltprotokoll für integrierte Schaltungen
Protocole de désactivation pour circuits intégrés

(43) Date of publication of application: 08.05.2002
(73) Proprietor: STMicroelectronics S.r.l., 20041 Agrate Brianza (Milano) (IT)
(72) Inventor: Alia, Michele, 95014 Giarre (Catania) (IT); Carrano, Michele, 95028 Valverde (Catania) (IT); Pistritto, Carmelo, 95100 Catania (IT)
(74) Representative: Botti, Mario

(56) References cited:
- US-A- 5 586 307
- US-A- 5 615 376
- US-A- 6 088 806

## Description

### Field of Application

This invention is directed toward reducing power consumption in integrated circuits, and more particularly toward reducing power consumption by switching off the system clock for portions of integrated circuits that are temporarily unnecessary. In a preferred embodiment, this invention involves a power down circuit for use in a System on Chip SOC, comprising:
a plurality of circuit blocks in the SOC, each of said circuit blocks having a local clock;
a system clock coupled to said circuit blocks and structured to act as said local clock of selected ones of said plurality of circuit blocks;
a power control manager coupled to said plurality of circuit blocks and structured to provide a signal at least partially determining whether said system clock will act as said local clock of said plurality of circuit blocks.

### Background

Current trends in integrated circuit designs call for creating an entire manufactured circuit system on a single chip. These systems are termed System on Chip, or SOC. This differs from simple circuit integration in that many different types of circuits can be included on a single chip. For example, a SOC could include a computer processor, various signal processors, a large amount of memory, various clocks, power down circuits, and necessary system controllers all integrated on a single piece of silicon or integrated into a single package. This level of integration was not previously possible with prior integration techniques, and is very advantageous because useful devices can be created in very small sizes.

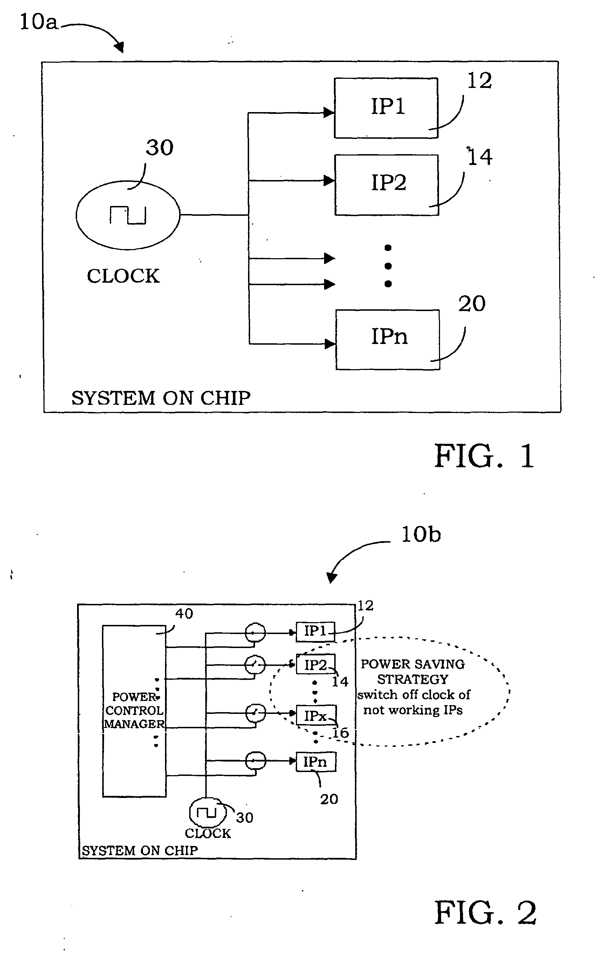

Figure 1 is a block diagram showing a SOC 10a. The SOC 10a is formed of a number of different integrated circuit portions (IPs) or blocks 12, 14, 16, 18, 20 (IC blocks 16 and 18 not shown in Figure 1). Each IP block 12, 14, etc. is tied to a system clock 30. The system clock 30 distributes its signal to each of the IP blocks 12, 14, etc. on the SOC 10a.

Important examples of devices that can include SOCs are cellular phones, palmtops, notebooks, computer components, movable equipment, communication apparatuses, biomedical apparatuses, digital cameras, MP3 players, etc. Such applications generally require a battery or some sort of power supply, presenting cost, duration, weight and dimension issues.

In order to increase the longevity of the power supplies for these devices, and especially for portable devices which require a portable power source, power consumption of the SOCs must be reduced from their current levels.

Dynamic power consumption of the different circuits blocks integrated on a single SOC is given by the formula P=fCv2, where P is Power, f is operating frequency of the circuit block, C is capacitance of all of the gates of the circuit block, and v is the power supply voltage. Therefore, in addition to reducing the power supply voltage and the overall capacitance, power of the SOC can be conserved by reducing the operating frequency of the different circuit blocks. One way to implement this is to temporarily switch off the system clock for some of the IP blocks of an SOC that were not necessary for immediate functions. Because not all of the IP blocks necessarily work contemporaneously in the SOC, some of them are unused and are eligible to be shut down.

Figure 2 shows an SOC 10b that is similar to the SOC 10a of Figure 1, but additionally includes a power control manager 40. The power control manager 40 controls a bank of switches 42 that are coupled between the system clock 30 and the various IP blocks 12, 14, etc. When the power control manager 40 determines that particular IP blocks should be shut down, for example 14 and 16, a signal is generated and fed to the bank of switches 42. The bank of switches 42 then controls the particular switch coupled to the selected IP blocks, in this example 14 and 16, and disconnects them from the system clock 30. When the selected IP blocks 14, 16 do not receive the system clock 30, they cease to function and, as seen from the above equation, draw no power because the operating frequency of the circuit is brought to 0.

Although the idea of separating the system clock from the various IP blocks is compelling, most SOCs cannot be controlled in such a manner. The implementation of such as system as shown in Figure 2 causes problems. As described above, many different types of IP blocks are contained within a particular SOC, and each of these IPs have unique requirements for when they can be safely shut down. It can therefore be difficult or impossible to establish an exact time when it is possible to switch off the clock to the IP without causing errors. In some cases, if the clock to the IP block is stopped abruptly, there is a risk of preventing a critical operation of the block. For example, an IP block could be performing a necessary communication protocol and the shutdown of the block could cause the SOC to violate the protocol. Examples of protocols that could easily be violated include memory-DMA, and master-slave blocks, among others. Additionally removing a system clock from a counter or a timing signal generator could be fatal to that particular IP block.

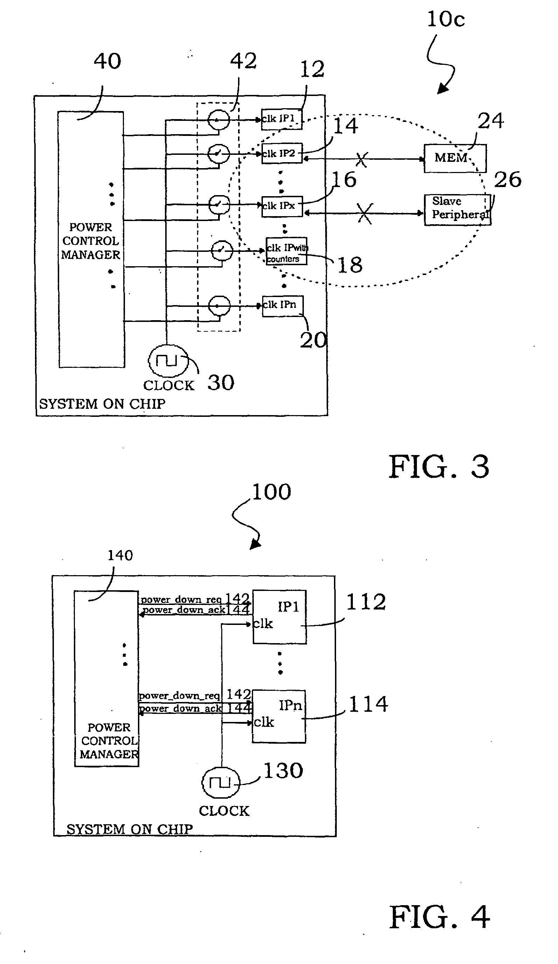

Some of these problems are illustrated in Figure 3, which shows a SOC 10c that has prevented the system clock 30 from reaching the IP blocks 14, 16 and 18, while continuing to supply the blocks 12, and 20. In each of the cases of the non-supplied blocks 14, 16, 18 there are potential problems. For instance, the IP block 14 could be in the middle of a memory DMA protocol operation with a memory unit 24 and its abrupt halt could violate that protocol. Similarly, the IP block 16 could be communicating with a slave peripheral 26, and an abrupt halt cause a malfunction or protocol violation. Additionally, the IP block 18 could contain counters which rely on the system clock 30 for accuracy. Separating the system clock 30 from the IP block 18 could seriously degrade such accuracy.

A power-down circuit to be used in a lap-top computer is described for instance in the US Patent No. 6,088,806 issued on July 11, 2000 in the name of Chee (Seiko Epson Corp.). Other clock management circuits are described in the US Patents No. 5,615,376 issued on March 25, 1997 in the name of Ranganathan (NeoMagic Corp.) and No. 5,586,307 issued on December 17, 1996 in the name of Wong et al. (Intel Corp.).

The technical problem solved by this invention is how to accurately control the shutdown of multiple disparate types of circuits that are integrated into a single system, in order to preserve the necessary function of said circuits.

### Summary of the Invention

The resolutive idea to the technical problem is achieved by establishing a communication protocol that causes selected IP blocks to receive a shutdown signal from a power control manager. The selected IP blocks then complete their current activity and, on completion, switch off their internal clock and send an acknowledging signal back to the power control manager. The shutdown signal is removed when the power control manager desires the IP blocks to restart, and the IP blocks send back an acknowledgement signal of the restart.

Based on this resolutive idea, this invention provides a selective power down circuit as previously indicated and defined in the characterizing portion of Claim 1.

Additionally, this invention provides a method for powering down individual circuit blocks of a plurality of circuit blocks as previously indicated and defined in the characterizing portion of Claim 8.

The features and advantages of the apparatus and method to power down selected circuit blocks according to the invention will be apparent by reading the following description of a preferred embodiment thereof, given by way of non-limitative example with reference to the accompanying drawings

### Brief description of the drawings

In the drawings:
Figure 1 is a block diagram of a System on Chip according to the prior art;
Figure 2 is a block diagram of a System on Chip that includes power control management according to the prior art;
Figure 3 is a block diagram of a System on Chip showing the problems associated with the System on Chip of Figure 2;
Figure 4 is a block diagram of a System on Chip including an embodiment of the inventive protocol;
Figure 5 is a flowchart showing an implementation of a first portion of the inventive protocol;
Figure 6 is a pseudocode listing describing the operation of the flowchart of Figure 5;
Figure 7 is a flowchart showing an implementation of a second portion of the inventive protocol;
Figure 8 is a pseudocode listing describing the operation of the flowchart of Figure 7;
Figure 9 is a block diagram and a related timing diagram showing the operation of some of the signals within a System on Chip embodying the inventive protocol; and
Figure 10 is a block diagram showing an implementation of portions of a complete System on Chip embodying the inventive protocol.

### Detailed Description

Figure 4 illustrates interconnections that can be used to implement the inventive protocol. Shown is a SOC 100 including a system clock 130, a power control manager 140, and two IP blocks 112 and 114. The system clock 130 is provided to each of the IP blocks 112, 114. Additionally, two signal lines couple each IP block 112, 114 to the power control manager 140. The first of these is a power down request line 142, and the second is a power down acknowledgement line 144. Each IP block 112, 114 has its own set of request and acknowledgement lines 142, 144 coupled to the power control manager 140. Of course any number of IP blocks 112, 114, etc. could be included in the SOC 100, with only the addition of the requisite number of request and acknowledgement lines 142, 144, and the proper connections to the system clock 130.

In operation, each IP block 112, 114 receives a "Power Down Request" signal on the power down request line 142. A signal of either 0 or 1 is always present on this request line 142. Normally, this signal will be 0 when the IP blocks 112, 114 are in operation, but the 1 signal could be used instead, and such a change is within the scope of one skilled in the art. For purposes of this description, a 0 signal on the power down request line 142 will indicate that the IP blocks 112, 114 should be operating normally, and a 1 signal on the power down request line 142 will indicate that the IP blocks 112, 114 should be shutdown.

When the power control manager 140 determines that a particular IP block should be shut down, it puts a 1 signal on the power down request line 142 coupled to the particular IP block. The selected IP block will receive the 1 signal on the request line 142 and finish its necessary operations. Once the operations are complete, the IP block will place a 1 signal on its power down acknowledgement line 144. Placing this signal on the acknowledgement line 144 then causes the system clock 130 to disconnect from a local clock of the IP block, and the IP block stops drawing power.

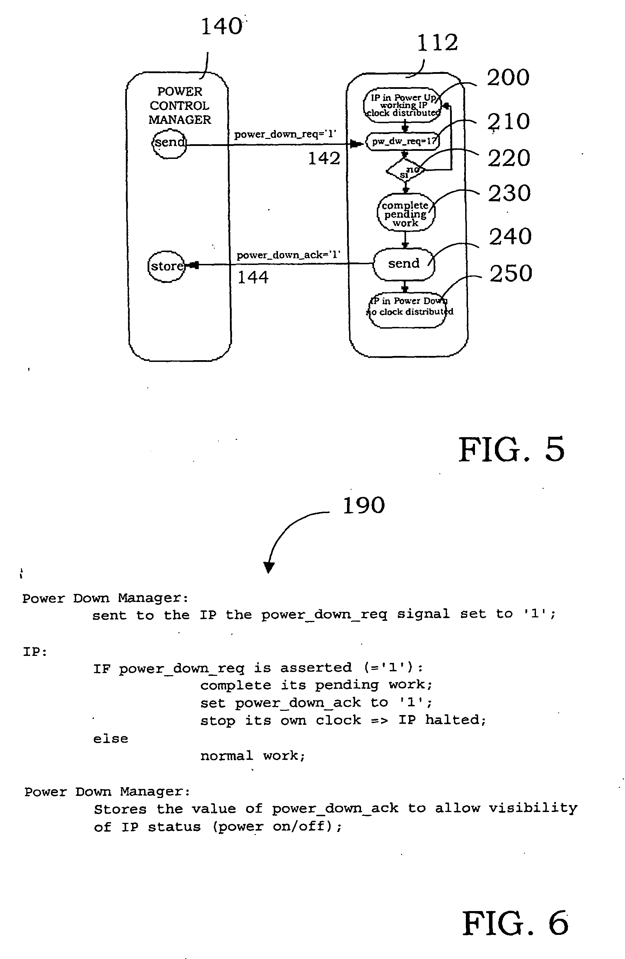

Figures 5 and 6 are a flowchart and pseudocode, respectively, explaining the operation of an implementation of the power down portion of the inventive protocol. In Figure 5, the power control manager 140 desires the IP block 112 to stop drawing power, and issues a 1 on the power down request line 142. The IP block 112 begins at a step 200 and monitors the signal on the request line 142 in a step 210. If the signal is 0 in a condition block 220, the IP block 112 continues looping through the steps 200, 210 and 220 until the signal on the request line 142 changes to a 1. When the step 210 recognizes that the signal on the request line 142 has changed to a 1, it proceeds to a step 230 where all of the necessary pending work in the IP block 112 is completed. Once that work is completed, the IP block 112 changes the signal on the power down acknowledgement line 144 from 0 to 1 in a step 240, and ceases to function in a step 250. The 1 signal on the acknowledgement line 144 is sensed by the power control manager 140. In the powered down state of step 250, the IP block 112 will draw no power from the SOC 100. The pseudocode 190 of Figure 6 succinctly explains the above paragraph.

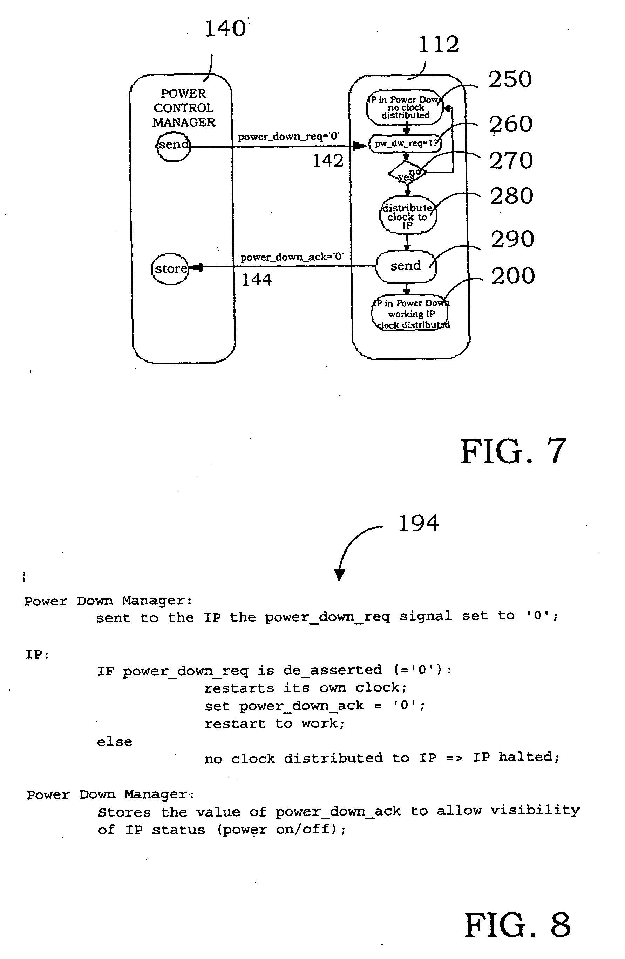

Figures 7 and 8, conversely, show how the protocol operates as the IP block 112 is being restarted after being shutdown. The IP block 112 begins in the state 250, the powered down state also shown in Figure 5, and immediately reads the request line 142 in a step 260 and begins checking in a step 270 to see if the signal on the request line 142 goes from 1 to 0, indicating that the IP block 112 is to restart. Once the request line goes from 1 to 0, the system clock 130 (Figure 4) is again distributed to the IP block 112 in a step 280, and the IP block changes the signal on the acknowledgement line 144 from 1 to 0 in a step 290. After this step, the IP block 112 proceeds back to the step 200, which is the normal operating step that the IP block started at in Figure 5. The pseudocode 194 of Figure 8 corresponds to the flowchart shown in Figure 7, and is self-explanatory.

The state of the request line 142 and the acknowledgement line 144 are stored in the power control manager 140. By evaluating the stored states, it can be determined with specificity which state any given IP block is in, as is seen in the following chart:

| 142 Request Line | 144 Ack line | Status of IP block |
|---|---|---|
| 0 | 0 | Currently running |
| 1 | 0 | Currently shutting down |
| 1 | 1 | Shut down |
| 0 | 1 | Restarting |

When both the request line 142 and the acknowledgement line 144 are both at 0, the IP block would be operating normally. When the request line 142 goes to 1 while the acknowledgement line 144 remains at 0, that indicates that the IP block has just been instructed to shutdown, but is still finishing its required tasks before doing so. When both the request line 142 and the acknowledgement line 144 are at 1, the IP block has shut down and sent the acknowledgement of such back to the power control manager by placing a 1 on the acknowledgement line 144. Finally, when the request line 142 goes to 0 while the acknowledgement line 144 remains at 1, the IP block will restart operations.

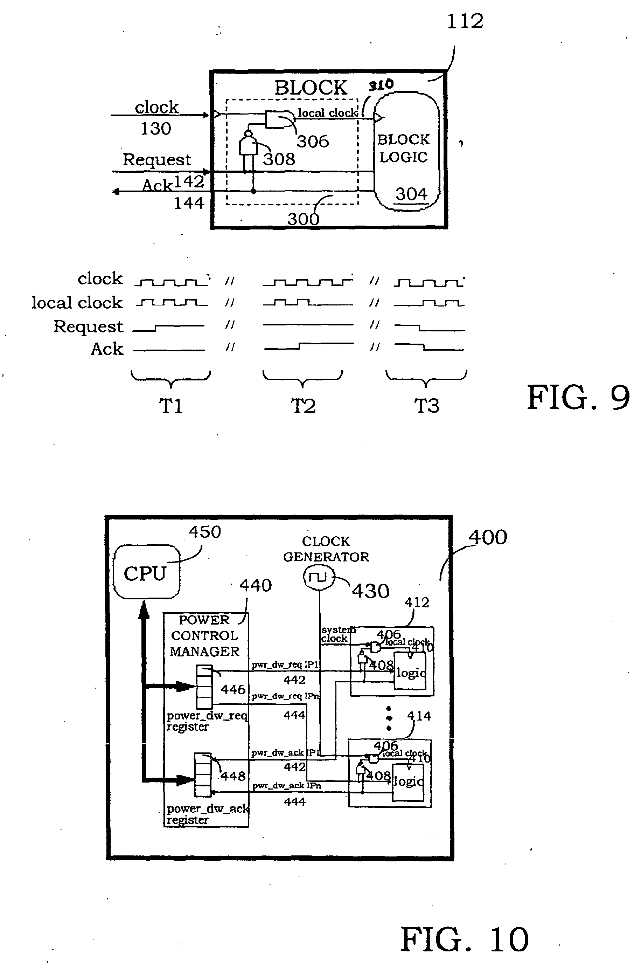

Figure 9 shows a block diagram of an example IP block 112, along with a related timing diagram showing sample clock waveforms as they exist in the SOC 100 of Figure 4. Included within the IP block 112 of Figure 9 is a set of block logic 304, which is specific to the type of circuit contained within the IP block 112. Additionally within the IP block 112 is a shutdown circuit 300, which in one example can include a set of logic gates 306 and 308. In this particular embodiment of the shutdown circuit 300, the logic gate 306 is an AND gate and the logic gate 308 is a NAND gate, although any combination of logic gates that produce the correct result is acceptable for the shutdown circuit 300 and within the scope of the invention. In Figure 9, the NAND gate 308 has a first input tied to the request line 142 and a second input tied to the acknowledgement line 144. An output signal from the NAND gate 308 is a first input to the AND gate 306, with the system clock 130 being a second input. The output of the AND gate 306 is a local clock signal 310, which is fed to the block logic 304. As can be seen from Figure 9, the local clock will have the same frequency as the system clock 130, but will only be present when the output signal from the NAND gate 308 is a 1 signal.

Examples of signals feeding the shutdown circuit 300 are also shown in Figure 9, in three different time periods, t1, t2 and t3. In all of the periods t1, t2 and t3, the system clock 130 continues to operate at the system frequency. In a first time period t1, the request line 142 changes from a 0 to a 1. This indicates that the power management system 140 of Figure 4 desires the IP block 112 to shut down. The IP block 112 begins to shut down at the end of the period t1, which correlates with the step 230 shown in Figure 5. Because the acknowledgement line 144 is still set to 0 throughout the entire period t1, the local clock 310 would continue to be supplied to the block logic 304 during the entire period t1.

In the period t2, the IP block 112 completes its current work and raises the acknowledgement line 144 from 0 to 1. Once this occurs, the output of the NAND gate 308 goes LOW, and therefore the output of the AND gate 306 also goes LOW. This causes the local clock 310 to cease, and the IP block 112 is in powered down mode.

In the period t3, the request line 142 changes from 1 to 0, indicating that the power control block 140 desires that the IP block 112 restart its operations. When the signal on the request line 142 changes from 1 to 0, the output of the NAND gate 308 immediately (after a negligible propagation delay) changes from 0 to 1. This, in turn, causes the AND gate 306 to again pass the system clock 130 as its output for the local clock 310, which is again fed to the block logic 304. Once the local clock 310 is present within the block logic 304, the IP block 112 lowers the acknowledgement line 144 from 1 to 0, indicating that it has resumed operation.

Figure 10 shows a top level architecture implementation of the inventive protocol. Shown in that figure is a SOC 400, including IP blocks 412 and 414. Again, any number of IP blocks could be present within the SOC 400, and only two are shown for purposes of illustration. A system clock 430 is always in operation within the SOC 400, and is distributed as a first input to an AND gate 406 within each of the IP blocks 412, 414. Another input to the AND gate 406 is an output from a NAND gate 408, also present in each IP block, which has a first input from a power down request line 442 and a second input from a power down acknowledgement line 444. When the signals on the request line 442 and the acknowledgement line 444 are both 1's, a local clock 410 is not passed to the respective block logic within the IP blocks 412, 414.

Otherwise, the local clock 410 is the same as the system clock 430, as discussed above.

The power control manager 440 includes a set of two registers, a first register 446, and a second register 448. These registers each contain memory storage locations, at least one location for each IP block 412, 414, etc. within the SOC 400. The first register 446 is coupled to all of the power down request lines 442 in the entire SOC 400. That is, each of the power down request lines 442 will have a 0 or a 1 signal on it determined by the datum stored in the respective memory location of the first register 446. Providing data on a signal line, such as the request line 442 to match data stored in a memory location, and reading data from a signal line and storing it in a memory location are conventionally known.

In one embodiment, a CPU 450 can write data into the particular memory location of the first register 446 for a particular IP block within the SOC 400, and the power down request line 442 will be changed accordingly. In another embodiment, the CPU 450 would not be allowed to write data into the first register 446, but could only read data already written there by the power control manager 450. In still another embodiment, programmable control could be given where it could be selected whether the power control manager 440 or the CPU 450, or both, could write data into the first register, thereby controlling the shutdown of the relative IP block.

The second register 448 is coupled to all of the power down acknowledgement lines 444 in the entire SOC 400. Each of the power down acknowledgement lines 444 will have a 0 or a 1 signal on it determined by the signal placed on the acknowledgement line 444 by the respective IP block 412, 414, etc. Because only the IP block itself can change the signal on the acknowledgement line 444, neither the power control manager 440 or the CPU 450 can write data into the second register 448, but both of them can read the data stored there.

An advantage to implementing the inventive protocol in the manner shown in Figure 10 is that the power control manager 440 and the CPU 450 always know the current states of the IP blocks 412, 414, etc. in the SOC 400 by comparing the data stored in the particular locations of the first and second registers 446, 448 that denote the respective IP blocks, and comparing the data read from the registers to the table provided above.

This protocol provides an easy and convenient way to safely switch off the clock to desired circuits within a System on Chip by providing a signal to the desired circuits and letting them finish their processing prior to shutting down. The implementation described above provides a further benefit in that control of such shutdowns can be executed by hardware and/or by software.

In an embodiment more than one system clock may be present and respectively structured to act as a local clock of selected ones of the plurality of circuit blocks.

## Claims

1. A power down circuit, comprising:
a plurality of circuit blocks (112, 412, 114, 414), each of said circuit blocks having a local clock (310,410);
a system clock (130, 430) coupled to said circuit blocks (112, 412, 114, 414) and structured to act as said local clock (310, 410) of selected ones of said plurality of circuit blocks;
a power control manager (140, 440) coupled to said plurality of circuit blocks (112, 412, 114, 414) and structured to provide a signal (142,442) at least partially determining whether said system clock (130, 430) will act as said local clock (310, 410) for each one of said circuit blocks; **characterized in that** one or more of the circuit blocks (112, 412, 114, 414) contain a shutdown circuit (300) structured to selectively prevent the system clock (130, 430) from acting as said local clock (310) in a respective circuit block after said shutdown circuit (300) of said circuit block receives a signal to shut down (142, 442) from said power control manager (140, 440) and after said circuit block has shut down.

2. A power down circuit according to Claim 1, further **characterized in that** said shutdown circuit (300) is a clock separation circuit coupled to the power control manager (140) and structured to prevent said system clock (130) from acting as said local clock (310) in a respective circuit block that has received said shutdown signal (142) and has completed any necessary tasks.

3. A power down circuit according to Claim 1, further **characterized in that** the power control manager (140,440) is coupled to said shutdown circuit (300) through a request line (142) and through an acknowledgement line (144).

4. A power down circuit according to Claims 2 and 3, further **characterized in that** said clock separation circuit includes a logic circuit (306, 308) coupled to said request line (142), said acknowledgement line (144), and said system clock (130), and said logic circuit is structured to generate said local clock (310) at the output of said logic circuit (306, 308) responsive to signals on said request line (142), said acknowledgement line (144), and said system clock (130).

5. A power down circuit according to Claim 1, further **characterized in that** said power control manager (440) comprises a first register (446) coupled to a request line (442) of each of said circuit blocks (112, 114, 412, 414) and a second register (448) coupled to an acknowledgment line (444) of each of said circuit blocks (112, 114, 412, 414), and **in that** said first register (446) stores a datum indicating a state of each of the request lines (442) coupled to it, and **in that** said second register (448) stores a datum indicating a state of each of the acknowledgement lines (144) coupled to it.

6. A power down circuit according to Claim 5, **characterized in that** it further comprises a CPU coupled to said power control manager (140) that is able to determine states of said circuit blocks (112, 114, 412, 414) by querying said first register (446) and said second register (448).

7. A power down circuit according to Claim 1, **characterized in that** more than one system clocks are present and are respectively structured to act as said local clock (310) of selected ones of said plurality of circuit blocks.

8. A method of powering down individual circuit blocks of a plurality of circuit blocks, comprising the steps of:
generating a system clock signal (130) that is coupled to said plurality of circuit blocks (112, 114, 412, 414) and used as respective local clocks (310) for said plurality of circuit blocks;
generating signals(142) to selectively power down each one of said plurality of circuit blocks;
transmitting respective signals to power down (142) selected circuit blocks to respective shutdown circuits(300) comprised in said circuit blocks, **characterized in that** the method further comprises:
accepting said signals to power down (142) at said shutdown circuits(300) in said selected circuit blocks (112, 114, 412, 414);
finishing necessary circuit operations within said selected circuit blocks (112, 114, 412, 414) prior to shutting down said selected circuit blocks,
shutting down said selected circuit blocks ; and
selectively preventing the system clock (130,430) from acting as said local clock (310) in a respective circuit block after said circuit block has shut down.

9. A method of powering down individual circuit blocks according to Claim 8, **characterized in that** said method further comprises generating a signal (144, 444) that a selected circuit block has shut down after said selected circuit block has shut down.

10. A method of powering down individual circuit blocks according to Claim 9 **characterized in that** preventing said system clock (130) from acting as said local clock (310) comprises disconnecting said system clock (130, 430) from said local clock (310) only when said signal to power down (142) said selected circuit block and said signal that selected circuit block has shut down (144) is received at a logic circuit (300).

## Patentansprüche

1. Abschaltschaltung, umfassend:
eine Mehrzahl von Schaltungsblöcken (112, 412, 114, 414), wobei jeder der Schaltungsblöcke einen lokalen Takt (310, 410) aufweist;
einen Systemtakt (130, 430), der mit den Schaltungsblöcken (112, 412, 114, 414) gekoppelt ist und derart aufgebaut ist, als der lokale Takt (310, 410) von ausgewählten der Mehrzahl von Schaltungsblöcken zu fungieren;
eine Leistungssteuerungs-Handhabungseinrichtung (140, 440), die mit der Mehrzahl von Schaltungsblöcken (112, 412, 114, 414) gekoppelt ist und derart aufgebaut ist, ein Signal (142, 442) bereitzustellen, das wenigstens teilweise bestimmt, ob der Systemtakt (130, 430) als der lokale Takt (310, 410) für jeden der Schaltungsblöcke fungiert; **dadurch gekennzeichnet, dass** einer oder mehrere der Schaltungsblöcke (112, 412, 114, 414) eine Ausschaltschaltung (300) enthalten, die derart aufgebaut ist, in selektiver Weise den Systemtakt (130, 430) davon abzuhalten, als der lokale Takt (310) in einem jeweiligen Schaltungsblock zu fungieren, nachdem die Ausschaltschaltung (300) des Schaltungsblocks ein Signal zum Ausschalten (142, 442) von der Leistungssteuerungs-Handhabungseinrichtung (140, 440) empfängt und nachdem der Schaltungsblock abgeschaltet hat.

2. Abschaltschaltung nach Anspruch 1, weiterhin **gekennzeichnet dadurch, dass** die Ausschaltschaltung (300) eine Taktseparierungsschaltung ist, die mit der Leistungssteuerungs-Handhabungseinrichtung (140) gekoppelt ist, und die derart aufgebaut ist, den Systemtakt (130) davon abzuhalten, als der lokale Takt (310) in einem jeweiligen Schaltungsblock zu fungieren, der das Ausschaltsignal (142) empfangen hat und notwendige Maßnahmen vervollständigt hat.

3. Abschaltschaltung nach Anspruch 1, weiterhin **dadurch gekennzeichnet, dass** die Leistungssteuerungs-Handhabungseinrichtung (140, 440) mit der Ausschaltschaltung (300) über eine Anforderungsleitung (142) und über eine Bestätigungsleitung (144) gekoppelt ist.

4. Abschaltschaltung nach Ansprüchen 2 und 3, weiterhin **dadurch gekennzeichnet, dass** die Taktseparierungsschaltung eine logische Schaltung (306, 308) beinhaltet, die mit der Anforderungsleitung (142), der Bestätigungsleitung (144) und mit dem Systemtakt (130) gekoppelt ist, wobei die logische Schaltung derart aufgebaut ist, den lokalen Takt (310) an dem Ausgang der logischen Schaltung (306, 308) zu generieren in Reaktion auf Signale auf der Anforderungsleitung (142), der Bestätigungsleitung (144) und dem Systemtakt (130).

5. Abschaltschaltung nach Anspruch 1, weiterhin **dadurch gekennzeichnet, dass** die Leistungssteuerungs-Handhabungseinrichtung (440) ein erstes Register (446) aufweist, das mit einer Anforderungsleitung (442) eines jeden der Schaltungsblöcke (112, 114, 412, 414) gekoppelt ist, und ein zweites Register (448) aufweist, das mit einer Bestätigungsleitung (444) eines jeden der Schaltungsblöcke (112, 114, 412, 414) gekoppelt ist, und dass das erste Register (446) ein Datum speichert, das einen Zustand einer jeden der Anforderungsleitungen (442) anzeigt, die mit ihm gekoppelt ist, und dass das zweite Register (448) ein Datum speichert, das einen Zustand einer jeden der Bestätigungsleitungen (144) anzeigt, die mit ihm gekoppelt ist.

6. Abschaltschaltung nach Anspruch 5, **dadurch gekennzeichnet, dass** sie weiterhin eine CPU aufweist, die mit der Leistungssteuerungs-Handhabungseinrichtung (140) gekoppelt ist, die in der Lage ist, Zustände der Schaltungsblöcke (112, 114, 412, 414) zu bestimmen, indem das erste Register (446) und das zweite Register (448) abgefragt werden.

7. Abschaltschaltung nach Anspruch 1, **dadurch gekennzeichnet, dass** mehr als ein Systemtakt vorhanden sind und jeweils derart aufgebaut sind, als der lokale Takt (310) von ausgewählten der Mehrzahl von Schaltungblöcken zu fungieren.

8. Verfahren zum Abschalten von einzelnen Schaltungsblöcken einer Mehrzahl von Schaltungsblöcken, umfassend die Schritte:
Erzeugung eines Systemtaktsignals (130), das mit der Mehrzahl von Schaltungsblöcken (112, 114, 412, 414) gekoppelt ist und als jeweilige lokale Takte (310) für die Mehrzahl von Schaltungsblöcken verwendet wird;
Erzeugung von Signalen (142), um selektiv jeden der Mehrzahl von Spaltungsblöcken abzuschalten;
Übertragen von jeweiligen Signalen, um ausgewählte Schaltungsblöcke abzuschalten (142), an jeweilige Ausschaltschaltungen (300), die in den Schaltungsblöcken enthalten sind, **dadurch gekennzeichnet, dass** das Verfahren weiterhin aufweist:
Aufnehmen der Abschaltsignale (142) an den Ausschaltschaltungen (300) in den ausgewählten Schaltungsblöcken (112, 114, 412, 414);
Abschließen von notwendigen Schaltungsoperationen innerhalb der ausgewählten Schaltungsblöcke (112, 114, 412, 414), bevor die ausgewählten Schaltungsblöcke ausgeschaltet werden;
Ausschalten der ausgewählten Schaltungsblöcke und
selektives Abhalten des Systemtakts (130, 430), als der lokale Takt (310) in einem jeweiligen Schaltungsblock zu fungieren, nachdem der Schaltungsblock abgeschaltet hat.

9. Verfahren zum Abschalten von einzelnen Schaltungsblöcken gemäß Anspruch 8, **dadurch gekennzeichnet, dass** das Verfahren weiterhin umfasst das Erzeugen eines Signals (144, 444), dass ein ausgewählter Schaltungsblock abgeschaltet hat, nachdem der ausgewählte Schaltungsblock abgeschaltet hat.

10. Verfahren zum Abschalten von einzelnen Schaltungsblöcken nach Anspruch 9, **dadurch gekennzeichnet, dass** das Abhalten des Systemtakts (130), als der lokale Takt (310) zu fungieren, das Trennen des Systemtakts (130, 430) von dem lokalen Takt (310) nur umfasst, wenn das Signal, den ausgewählten Schaltungsblock abzuschalten (142), und das Signal, dass der ausgewählte Schaltungsblock abgeschaltet hat (144), an einer logischen Schaltung (300) empfangen werden.

## Revendications

1. Circuit de mise hors tension, comprenant :
une pluralité de blocs de circuit (112, 412, 114, 414), chacun desdits blocs de circuit ayant
une horloge locale (310, 410) ;
une horloge système (130, 430) couplée auxdits blocs de circuit (112, 412, 114, 414) et structurée pour agir comme ladite horloge locale (310, 410) de certains sélectionnés de ladite pluralité de blocs de circuit ;
un système de gestion de commande d'alimentation (140, 440) couplé à ladite pluralité de blocs de circuit (112, 412, 114, 414) et structuré pour fournir un signal (142, 442) déterminant au moins partiellement si ladite horloge système (130, 430) agit comme ladite horloge locale (310, 410) pour chacun desdits blocs de circuits ; **caractérisé en ce qu'**un ou plusieurs des blocs de circuit (112, 412, 114, 414) contiennent un circuit d'arrêt (300) structuré pour empêcher de manière sélective le système d'horloge (130, 430) d'agir comme ladite horloge locale (310) dans un bloc de circuit respectif après réception par ledit circuit d'arrêt (300) dudit bloc de circuit d'un signal d'arrêt (142, 442) en provenance dudit système de gestion de commande d'alimentation (140, 440) et après que ledit bloc de circuit a été arrêté.

2. Circuit de mise hors tension selon la revendication 1, **caractérisé** de plus en ce ledit circuit d'arrêt (300) est un circuit de séparation d'horloge couplé au système de gestion de commande d'alimentation (140) et structuré pour empêcher ladite horloge système (130) d'agir comme ladite horloge locale (310) dans un bloc de circuit respectif qui a reçu ledit signal d'arrêt (142) et a achevé toutes les tâches requises.

3. Circuit de mise hors tension selon la revendication 1, **caractérisé de plus en ce que** le système de gestion de commande d'alimentation (140, 440) est couplé audit circuit d'arrêt (300) par une ligne de requête (142) et par une ligne d'accusé de réception (144).

4. Circuit de mise hors tension selon les revendications 2 et 3, **caractérisé de plus en ce que** ledit circuit de séparation d'horloge inclut un circuit logique (306, 308) couplé à ladite ligne de requête (142), à ladite ligne d'accusé de réception (144), et à ladite horloge système (130), et ledit circuit logique est structuré pour générer ladite horloge locale (310) à la sortie dudit circuit logique (306, 308) en réponse à des signaux sur ladite ligne de requête (142), ladite ligne d'accusé de réception (144) et ladite horloge système (130).

5. Circuit de mise hors tension selon la revendication 1, **caractérisé de plus en ce que** le système de gestion de commande d'alimentation (440) comprend un premier registre (446) couplé à une ligne de requête (442) de chacun desdits blocs de circuit (112, 114, 412, 414) et un deuxième registre (448) couplé à une ligne d'accusé de réception (444) de chacun desdits blocs de circuit (112, 114, 412, 414) et **en ce que** ledit premier registre (446) stocke une donnée représentant un état de chacune des lignes de requête (442) reliée à lui, et en que ledit deuxième registre (448) stocke une donnée représentant un état de chacune des lignes d'accusé de réception (144) reliée à lui.

6. Circuit de mise hors tension selon la revendication 5, **caractérisé en ce qu'**il comprend de plus une unité centrale de traitement couplée audit système de gestion de commande d'alimentation (140) qui peut déterminer les états desdits blocs de circuit (112, 114, 412, 414) en interrogeant ledit premier registre (446) et ledit deuxième registre (448).

7. Circuit de mise hors tension selon la revendication 1, **caractérisé en ce que** qu'il y a plus d'une horloge système, qui sont respectivement structurées pour agir comme ladite horloge locale (310) de certains sélectionné de ladite pluralité de blocs de circuit.

8. Procédé de mise hors tension de blocs de circuit individuels d'une pluralité de blocs de circuit, comprenant les étapes consistant à :
produire un signal d'horloge système (130) qui est couplé à ladite pluralité de blocs de circuit (112, 114, 421, 414) et utilisé comme horloges locales respectives (310) pour ladite pluralité de blocs de circuit ;
produire des signaux (142) pour mettre hors tension sélectivement chacun de ladite pluralité de blocs de circuit ;
transmettre des signaux respectifs pour mettre hors tension (142) des blocs de circuit sélectionnés à des circuits d'arrêt (300) contenus dans lesdits blocs de circuit, **caractérisé en ce que** le procédé comprend de plus les étapes consistant à :
accepter lesdits signaux de mise hors tension (142) au niveau desdits circuits d'arrêt (300) dans lesdits blocs de circuit sélectionnés (112, 114, 412, 414) ;
finir lesdites opérations requises à l'intérieur desdits blocs de circuit sélectionnés (112, 114, 412, 414) avant d'arrêter lesdits blocs de circuit sélectionnés;
mettre hors tension lesdits blocs de circuit sélectionnés ; et
empêcher sélectivement l'horloge système (130, 430) d'agir comme ladite horloge locale (310) dans un bloc de circuit respectif après arrêt dudit bloc de circuit.

9. Procédé selon la revendication 8, **caractérisé en ce que** ledit procédé comprend de plus la génération d'un signal (144, 444) comme quoi un bloc de circuit sélectionné est arrêté après que ledit bloc de circuit sélectionné a été arrêté.

10. Procédé selon la revendication 9, **caractérisé en ce que** l'action d'empêcher ladite horloge système (130) d'agir comme ladite horloge locale (310) comprend l'action de déconnecter ladite horloge système (130, 430) de ladite horloge locale (310) seulement quand ledit signal de mise hors tension (142) dudit bloc de circuit sélectionné et ledit signal comme quoi ledit bloc de circuit sélectionné est arrêté (144) sont reçus au niveau d'un circuit logique (300).
